# EUROPEAN PATENT APPLICATION

(11) **EP 1 621 587 A1**
(43) Date of publication of application: **01.02.2006**
(21) Application number: 03728012.0
(22) Date of filing: 30.04.2003
(51) Int. Cl.: C09C 3/10, C08J 3/03, C08F 290/06, B01J 13/00

(54) **AQUEOUS DISPERSION AND PROCESS FOR PRODUCTION THEREOF**

(71) Applicant: HITACHI MAXELL, LTD., Ibaraki-shi, Osaka 567-8567 (JP)
(72) Inventor: MIZUTANI, Takuo, Hitachi Maxell Daiichikoyo-ryo, Otokuni-gun, Kyoto 618-00 00 (JP); FURUTANI, Takahiro, Suita-shi, Osaka 565-0802 (JP); TAKAO, Nagayuki, Muko-shi, Kyoto 617-0002 (JP)
(74) Representative: Jönsson, Hans-Peter
(86) International application number: PCT/JP2003/005508
(87) International publication number: WO 2004/096923

(57) **Abstract**

An aqueous dispersion containing a water-insoluble solid, wherein the solid consists of fine particles surfaces of which are coated with a resin having a polyether structure, and a coated amount of the resin is 15 to 1,000 parts by weight per 100 parts of the solid. This aqueous dispersion has improved dispersion stability for various solids such as pigments, dyes, and so on, causes no problems such as precipitation of the solid particles during the storage of the dispersion, and thus can be stably stored for a long time. The present invention can provide an aqueous dispersion used as an ink-jet printing ink, which has good high speed printing properties besides the above properties.

## Description

### Field of the Invention

The present invention relates to an aqueous dispersion comprising a water-insoluble solid finely dispersed in water, and a method for producing such a dispersion.

### Description of Prior Art

Aqueous dispersions comprising water-insoluble solids finely dispersed in water are widely used as paints, printing inks, liquid developers (wet type toners) and ink-jet printing inks which comprise pigments or dyes as water-insoluble solids; drugs which comprise medicaments as water-insoluble solids; and industrial products or intermediates which comprise catalysts or polymerization initiators as water-insoluble solids.

It is desired for these aqueous dispersions to have good dispersion stability of solid particles and to cause no problem such as sedimentation of solid particles during storage so that the dispersions can be stably stored for a long time. Hitherto, various attempts have been made to improve the stability of aqueous dispersions, for example, by selecting particle sizes and dispersion-stabilizers depending on the kinds of solids, or by precipitating a resin having an anionic group using an acid on the surfaces of pigment particles as solid particles to form a coating film thereon in the case of ink-jet printing inks (JP-A-9-151342) .

However, the above conventional methods may not satisfactorily improve the dispersion stability and thus the solid particles still precipitate during storage. Therefore, the deterioration of performance of the dispersion is inevitable or the dispersion cannot be used as intended, when the aqueous dispersion is used in the applications such as paints, printing inks, etc.

### Description of the Invention

One object of the present invention is to provide an aqueous dispersion of solid particles, which can improve the dispersion stability of a wide variety of solid particles such as pigments and dyes, do not cause any problem such as precipitation of the solid particles, and can be stably stored for a long time.

Another object of the present invention is to provide an aqueous dispersion which has, in addition to the above characteristics, good high speed-printing properties as an ink-jet printing ink.

As the result of extensive studies by the present inventors to achieve the above objects, it has been found that when a resin having a polyether structure is used as a component for improving the dispersion stability of solid particles in an aqueous medium and an aqueous phase is mixed with an organic solvent phase containing such a resin and solid particles, the resin adheres to the surfaces of the solid particles to form fine particles which are coated with the resin, and that the coated amount of the resin is much larger than the coated amount of a resin which is precipitated with an acid as disclosed in JP-A-9-151342 and thereby the dispersion stability of the solid particles is significantly improved so that an aqueous dispersion of solid particles, which does not have any problem such as precipitation of the particles during storage and can be stably stored for a long time, is obtained. This may be because the resin having the polyether structure is easily self-dispersed in water. When a pigment is used as solid particles, an aqueous dispersion containing a pigment can be used as an ink-jet printing ink which does not suffer from the lowering of a surface tension and has good high speed-printing properties by virtue of the properties of the resin and the structure of the resin coating.

The present inventions have been completed based on the above findings.

Accordingly, the present invention provides an aqueous dispersion containing a water-insoluble solid, wherein the solid consists of fine particles the surfaces of which are coated with a resin having a polyether structure, and the coated amount of the resin is 15 to 1,000 parts by weight per 100 parts of the solid.

Furthermore, the present invention provides a method for producing an aqueous dispersion comprising mixing an organic solvent phase containing a water-insoluble solid and a resin having a polyether structure with an aqueous phase.

### Detailed Description of the Preferred Embodiments

The resin having a polyether structure used in the present invention has a polyester structure which is compatible with the surfaces of the solid particles and also water and in particular comprises at least one of polyoxyethylene and polyoxypropylene structures which have good hydrophilicity and also a self-dispersing property. That is, when this resin is dissolved in an organic solvent to form a solution and the solution is mixed with water, the resin itself is dispersed in water to form a dispersion of finely dispersed resin particles.

To impart such a property to the resin, the resin preferably has a polar group consisting of an acid or base group in the molecule, in particular, a carboxyl group, a sulfonic acid group or a phosphonic acid group as an acid group. In particular, the resin preferably has a carboxyl group which has a weak acidity so that it less causes the coagulation of the dispersed particles.

The resin used in the present invention preferably has an acid value of 5 to 70 KOH-mg/g, more preferably 10 to 65 KOH-mg/g, most preferably 10 to 50 KOH-mg/g. When the acid value of the resin is less than 5 KOH-mg/g or exceeds 70 KOH-mg/g, the resin may be less self-dispersed in the medium. In addition, when the acid value of the resin is too low, the affinity of the resin with the solid particles decreases so that the fine aqueous dispersion may not be formed or the electric charge on the solid particles tend to decrease. The fine particles of the solid in the aqueous dispersion preferably have an acid value of 2 to 95 KOH-mg/g, more preferably 5 to 68 KOH-mg/g.

Examples of the resin having the polyether structure include acrylic resins, polyester resins, polyurethane resins, epoxy resins, amino resins, etc. They may be used independently or as a mixture of two or more of them. Among them, the acrylic resins, in particular, acrylic resins having the polyether structure in the grafted portions are preferably used since the introduction of polar groups in the molecule and grafting are easy, and they can easily attain a self-dispersing property in water.

Such an acrylic resin may be prepared by radically polymerizing an acrylic monomer and a monomer having a polar group with a macromonomer having a polyether structure and optionally other copolymerizable monomer in the presence of a polymerization initiator.

Examples of the acrylic monomer include acrylate esters such as methyl acrylate, ethyl acrylate, isopropyl acrylate, n-propyl acrylate, n-butyl acrylate, tert.-butyl acrylate, 2-ethylhexyl acrylate, octyl acrylate, lauryl acrylate, cetyl acrylate, stearyl acrylate, behenyl acrylate, benzyl acrylate, etc.; and methacrylate esters such as methyl methacrylate, ethyl methacrylate, isopropyl methacrylate, n-propyl methacrylate, n-butyl methacrylate, isobutyl methacrylate, tert.-butyl methacrylate, 2-ethylhexyl methacrylate, octyl methacrylate, lauryl methacrylate, tridecyl methacrylate, cetyl methacrylate, stearyl methacrylate, behenyl methacrylate, benzyl methacrylate, etc. Among them, those having a relatively low molecular weight such as methyl acrylate, ethyl acrylate, isopropyl acrylate, n-propyl acrylate, n-butyl acrylate, tert.-butyl acrylate, methyl methacrylate, ethyl methacrylate, isopropyl methacrylate, n-propyl methacrylate, n-butyl methacrylate, isobutyl methacrylate, tert.-butyl methacrylate, etc. are particularly preferable. The amount of such a monomer or monomers is preferably 5 to 80% by weight, more preferably 10 to 70% by weight based on the total weight of the monomers.

As a monomer having a polar group, a monomer having an acid group or a monomer having a base group is used. Examples of the monomer having an acid group include monomers having a carboxyl group such as acrylic acid, methacrylic acid, crotonic acid, ethacrylic acid, propylacrylic acid, isopropylacrylic acid, itaconic acid, fumaric acid, acryloyloxyethyl phthalate, acryloyloxy succinate; monomers having a sulfonic acid group such as 2-sulfonyletyl acrylate, 2-sulfonylethyl methacrylate, butylarylaminde sulfonic acid, etc.; monomers having a phosphonic acid group such as 2-phosphonylethyl methacrylate, 2-phosphonylethyl acrylate, etc.; and monomers having a hydroxyl group such as 2-hydroxyethyl acrylate, 2-hydroxyethyl methacrylate, hydroxypropyl acrylate, hydroxypropyl methacrylate, etc. Among them, the monomers having a carboxyl group such as acrylic acid and methacrylic acid, and the monomers having a hydroxyl group such as 2-hydroxyethyl acrylate, 2-hydroxyethyl methacrylate, hydroxypropyl acrylate, hydroxypropyl methacrylate, etc. are particularly preferable.

The amount of the monomer having a carboxyl group is preferably 0.5 to 10% by weight, more preferably 1 to 7% by weight based on the total weight of the monomers. The effects of the present invention are often achieved, when the monomer having a hydroxyl group is used in an amount of preferably 10 to 50% by weight, more preferably 20 to 40% by weight based on the total weight of the monomers.

Examples of the monomer having a base group include monomers having a primary amino group such as acrylamide, aminoethyl methacrylate, aminopropyl acrylate, methacrylamide, aminoethyl methacrylate, aminopropyl methacrylate, etc.; monomers having a secondary amino group such as methylaminoethyl acrylate, methylaminoproyl acrylate, ethylaminoethyl acrylate, ethylaminopropyl acrylate, methylaminoethyl methacrylate, methylaminopropyl methacrylate, ethylaminoethyl methacrylate, ethylaminopropyl methacrylate, etc.; monomers having a tertiary amino group such as dimethylaminoethyl acrylate, diethylaminoethyl acrylate, dimethylaminopropyl methacrylate, diethylaminopropyl acrylate, dimethylaminoethyl methacrylate diethylaminoethyl methacrylate, dimethylaminopropyl methacrylate, diethylaminopropyl methacrylate, etc.; and monomers having a quaternary ammonium group such as dimethylaminoethyl acrylate methyl chloride, dimethylaminoethyl methacrylate methyl chloride, dimethylaminoethyl acrylate benzyl chloride, dimethylaminoethyl methacrylate benzyl chloride, etc.

Examples of the macromonomer having a polyether structure include macromonomers comprising methoxy polyethylene glycol or methoxy polypropylene glycol to which an acryloyl group or a methacryloyl group is bonded directly or via an alkyl group. Preferable examples of commercially available macromonomers are PE-200, PE-350, AE-200, AE-350, AP-400, AP-550, AP-800, 70PEP-350B, 10PEP-550B, AEP, 50POEP-800B, 50AOEP-800B, PLE, ALE, PSE, ASE, PNE, ANE, PNP, ANP, PNEP-600, PME-200, PME-400, PME-1000, AME-400, PP-500, PP-800 and PP-100 (all available from NOF Corporation), AMP-10G, AMP-20G, AMP-60G and AM-90G (all available from SHIN-NAKAMURA CHEMICAL, Co., Ltd.), BISCOAT #355HP, BISCOAT #310, BISCOAT #310HP, BISCOAT #310HG, BISCOAT #312 and BISCOAT #700 (all available from OSAKA ORGANIC CHEMCAL INDUSTRY LTD.), LIGHT-ACRYLATE EHDG-A, LIGHT-ACRYLATE EC-A, LIGHT-ACRYLATE MTG-A, LIGHT-ACRYLATE 130A, LIGHT-ACRYLATE P-200A, LIGHT-ACRYLATE NP-4EA, LIGHT-ACRYLATE NP-8EA, LIGHT-ESTER MC, LIGHT-ESTER 130MA and LIGHT-ESTER 041MA (all available from KYOEISHA CHEMICAL Co., Ltd.), NK ESTER M-20G, NK ESTER M-40G and NK ESTER M-90G (all available from SHIN-NAKAMURA CHEMICAL, Co., Ltd.), and ADEKAREASOAP NE-10, ADEKAREASOAP NE-20 and ADEKAREASOAP NE-40 (all available from ASAHI DENKA Co., Ltd.).

The macromonomer preferably has a molecular weight of 150 to 10,000, more preferably 180 to 2,000. When the molecular weight of the macromonomer is less than 150, the steric repellency of the grafted groups decreases when the resin is adhered to the surfaces of the solid particles so that the particles easily agglomerate, and thus the dispersion may have decreased storage stability. When the molecular weight of the macromonomer exceeds 10,000, the grafted groups cause steric hindrance and the resin has less affinity with the solid, when the resin is adhered to the surfaces of the solid particles, and thus the dispersibility of the particles may deteriorate.

The amount of the macromonomer is preferably 5 to 70% by weight, more preferably 10 to 50% by weight based on the total weight of the monomers. When the amount of the macromonomer is less than 5% by weight, the effects of the grafted groups decrease so that the resin has lower self-dispersing property. When the amount of the macromonomer exceeds 70% by weight, the hydrophilicity of the resin increases so that the resin is easily dissolved in water and the resin tends to hardly adhere to the surfaces of the solid particles.

Examples of the other copolymerizable monomer include styrenic monomers such as styrene, α-methylstyrene, o-methylstyrene, m-methylstyrene, p-methylstyrene, p-tert.-butylstyrene, etc.; itaconates such as benzyl itaconate; maleates such as dimethyl maleate, etc.; fumarates such as dimethyl fumarate, etc.; α-olefins such as ethylene, etc.; acrylonitrile, methacrylonitrile, vinyl acetate, glycidyl methacrylate, glycidyl acrylate, and so on. Among them, styrenic monomers such as styrene, α-methylstyrene, o-methylstyrene, m-methylstyrene, p-methylstyrene, etc. or glycidyl group-containing monomers such as glycidyl methacrylate, glycidyl acrylate, etc. are particularly preferable. The amount of the styrenic monomer is preferably 5 to 50% by weight, more preferably 10 to 30% by weight based on the total weight of the monomers. The effects of the present invention are often achieved when the glycidyl group-containing monomer is preferably used in an amount of 1 to 15% by weight, more preferably 2 to 10% by weight based on the total weight of the monomers.

The radial polymerization may be carried out by any conventional polymerization process, for example, bulk polymerization, solution polymerization, suspension polymerization, emulsion polymerization, and redox polymerization. The solution polymerization is preferable since the reaction mode is simple. Examples of unreactive solvents used for the solution polymerization include aliphatic hydrocarbons such as hexane, mineral spirits, etc.; aromatic hydrocarbons such as benzene, toluene, xylene, etc.; esters such as butyl acetate, etc.; alcohols such as methanol, butanol, etc.; ketones such as methyl ethyl ketone, isobutyl methyl ketone, etc.; and aprotic polar solvents such as dimethylformamide, dimethlsulfoxide, N-methylpyrrolidone, pyridine, etc. Optionally, these solvents may be used in admixture.

The radical polymerization initiator may be any conventional polymerization initiator, and examples thereof include organic peroxides such as tert.-butyl peroxybenzoate, di-tert.-butyl peroxide, cumene perhydroxide, acetyl peroxide, benzoyl peroxide, lauroyl peroxide, etc.; azo compounds such as azobisbutyronitrile, azobis-2,4-dimethyl valeronitrile, azobiscyclohexane carbonitrile, etc.

Reaction conditions in the radial polymerization vary depending on the kind of the polymerization initiator, the kind of the solvent, and so on. A reaction temperature is usually 180°C or less, preferably 30 to 150°C, and a reaction time is usually 0.5 to 40 hours, preferably 2 to 30 hours.

The resin having the polyether structure used in the present invention preferably has a number average molecular weight of 1,000 to 100,000, more preferably 3,000 to 30,000. When the number average molecular weight of the resin is less than 1,000, it may be difficult to finely disperse the solid particles in water and the solid particles tend to precipitate. When the number average molecular weight of the resin exceeds 100,000, the resin may hardly be dissolved in the solvent and thus the viscosity of the aqueous dispersion tends to greatly increase.

The water-insoluble solids used in the present invention may be inorganic pigments, organic pigments, dyes which are insoluble in water and organic solvents, in the case of paints, printing inks, in particular, ink-jet printing inks, liquid developers, and so on. Besides, various solid materials insoluble in water and organic solvents such as fillers, medicaments, polymerization initiators, catalysts, UV absorbers, etc. may be used depending on the applications of the dispersions.

Examples of the inorganic pigment include titanium oxide, Chinese white, zinc oxide, lithopone, iron oxide, aluminum oxide, silicon dioxide, kaolinite, montmorillonite, talc, barium sulfate, calcium carbonate, silica, alumina, cadmium red, colcothar, molybdenum red, chrome vermilion, molybdate orange, chrome yellow, cadmium yellow, iron oxide yellow, titanium yellow, chromium oxide, blue green, cobalt green, titanium-cobalt green, cobalt-chrome green, ultramarine, ultramarine blue, dark blue, cobalt blue, cerulean blue, manganese violet, cobalt violet, mica, etc.

Preferable examples of the organic pigment include azo pigments, azomethine pigments, polyazo pigments, phthalocyanine pigments, quinacridone pigments, anthraquinone pigments, indigo pigments, thioindigo pigments, quinophthalone pigments, benzimidazolone pigments, isoindoline pigments, isoindolinone pigments, or carbon black including acidic, neutral or basic carbon black, etc. Examples of the dye which is insoluble in water or organic solvents include azo dyes, anthraquinone dyes, indigo dyes, phthalocyanine dyes, carbonyl dyes, quinoneimine dyes, methine dyes, quinoline dyes, nitro dyes, etc. Among them, disperse dyes are preferable. In particular, pigments are preferable from the viewpoint of water and weather resistances.

Specific examples of a pigment which is used in a cyan ink composition include C.I. Pigment Blue 1, 2, 3, 15:3, 15:4, 15:34, 16, 22, 60, etc. Among them, C.I. Pigment Blue 15:3 and 15:4 or their mixtures are preferable.

Specific examples of a pigment which is used in a magenta ink composition include C.I. Pigment Red 5, 7, 12, 48(Ca), 49(Mn), 57 (Ca), 57:1, 112, 122, 123, 168, 184, 202 and 209, and C.I. Pigment Violet 19, etc. Among them, C.I. Pigment Red 57:1, 122, 202 and 209, and C.I. Pigment Violet 19 and their mixtures are preferable.

Specific examples of a pigment which is used in a yellow ink composition include C.I. Pigment Yellow 1, 2, 3, 12, 13, 14, 16, 17, 73, 74, 75, 83, 93, 95, 97, 98, 109, 110, 114, 120, 128, 129, 130, 138, 150, 151, 154, 155, 180 and 185. Among them, C.I. Pigment Yellow 14, 74, 83, 109, 110, 120, 150, 151, 155 and 180 and their mixtures are preferable.

Specific examples of a pigment which is used in a black ink composition include HCF, MCF, RCF, LFF and SCF (all available form Mitsubishi Chemical Corporation), Monarch and Regal (both available from Cabot Corporation), Color Black, Special Black and Printex (all available from Degussa-Huls AG), TOKA Black (available from Tokai Carbon Co., Ltd.), Raven (available from Columbian Chemicals Co.), and so on. In particular, HCF #2650, # 2600 # 2350 and #2300, MCF #1000, #980, #970 and #960, MCF 88, LFFMA 7, MA 8, MA 11, MA 77 and MA 100 (all available form Mitsubishi Chemical Corporation), Printex 95, 85, 75, 55, 45 and 25 (all available from Degussa-Huls AG) and their mixtures are preferably used.

In the present invention, the amount of the resin to be coated on the solid particles is usually 15 to 1,000 parts by weight, preferable 20 to 500 parts by weight, more preferably 25 to 200 parts by weight, per 100 parts by weight of the solid. The fine particles of the solid have an average particle size of 0.01 to 0.3 µm, more preferably 0.015 to 0.2 µm.

The coated structure of the solid particles with the resin is based on the bonding between the resin and the solid particles via chemical bonds between the resin and the solid (acid-base bonds, ionic bonds, covalent bonds, etc.), physical bonds (bonding formed by resin aggregation, mechanical bonds through dispersion force, etc.), physicochemical bonds, or any combination of these bonds. These bonds provide fairly strong adhesion states. The coated amount of the resin may be indirectly measured by adjusting a concentration of nonvolatiles in the aqueous dispersion to 2% by weight, subjecting the aqueous dispersion to centrifugation until a supernatant becomes transparent, and then measuring a resin concentration in the supernatant.

Besides the properties described above, the aqueous dispersion of the present invention has a far better dispersion stability than conventional aqueous dispersions containing a water-insoluble solid, since the solid particles have the coating structure as described above, and in particular, the coated amount of the resin is high, and therefore the solid particles are stably dispersed in water in the form of fine particles as describe above. As a result, the aqueous dispersion of the present invention does not suffer from problems such as precipitation during storage and it can be stably stored for a long time.

In contrast, when the coated amount of the resin and/or the average particle size of the coated solid particles are outside the determined ranges, the above effects are hardly attained. In particular, when the coated amount of the resin is less than 15 parts by weight per 100 parts by weight of the solid, the solid particles tend to agglomerate together so that the storage stability of the dispersion decreases, and the fixing of the solid particle onto a printing substrate deteriorates. When the coated amount of the resin exceeds 1,000 parts by weight, the above effects may saturate. When the average particle size of the fine particles exceeds 0.3 µm, the dispersion stability tends to decrease and thus the solid particles may agglomerate. When the dispersion containing solid particles having such a large average particle size is formulated as an ink, color reproducibility of a printed material may deteriorate, or a nozzle of an ink-jet printer may be clogged with the particles. When the fine particles have an average particle size of less than 0.01 µm, the contrast of a printed material may decrease.

In addition to the dispersion stability, the aqueous dispersion of the present invention can maintain a high surface tension since the resin has the above properties and the coating structure. The surface tension of the dispersion is 3.0 x 10⁻⁴ to 6.0 x 10⁻⁴ N/cm, preferably 3.5 x 10⁻⁴ to 5.5 × 10⁻⁴ N/cm, at a solid concentration of 3 to 10% by weight. Consequently, when the aqueous dispersion is used as an ink-jet printing ink, droplets of the dispersion form stale spheres and thus, an image printed is not distorted, and the aqueous dispersion has excellent high speed printing properties.

When an aqueous dispersion having a surface tension of less than 3.0 x 10⁻⁴ N/cm is used as an ink-jet printing ink, the droplet of the dispersion does not form a stable spherical shape so that the printed image may be distorted and the high speed printing property may be impaired.

JP-A-10-279873 proposes the use of a resin containing a silicone component as a dispersion stabilizer to improve the storage stability of an ink. However, the ink has a surface tension of less than 3.0 x 10⁻⁴ N/cm, and it cannot satisfy the properties of an ink-jet printing ink such as a high speed printing property.

The aqueous dispersion of the present invention may be prepared by mixing the organic phase containing the water-insoluble solid and the resin having a polyether structure with an aqueous phase and adhering the resin onto the surfaces of the solid particles to form fine particles the surfaces of which are coated with the resin. In this process, the large amount of the resin is easily deposited and adhered onto the surfaces of the solid particles, and thus the coated structure of the solid particles having a coated amount of 15% by weight or more based on the weight of the solid can be formed.

In a specific embodiment of the present invention, the above process can be carried out by the following steps:
A) dispersing the water-insoluble solid in an organic solvent in which the resin having the polyether structure has been dissolved;
B) pouring water in the dispersion prepared in the previous step, or pouring the dispersion prepared in the previous step in water, and mixing the dispersion and water to deposit and adhere the resin to the surfaces of the solid particles; and
C) if necessary, evaporating off the solvent to concentrate the dispersion after the previous mixing step.

In step A, the resin having the polyether structure is dissolved in an organic solvent and then the water-insoluble solid is added to the solution. Thereafter, the mixture is dispersed with a dispersing apparatus such as a bead mill (e.g. DYNO Mill, DSP Mill, etc.), a roll mill, a sand mill, an atriter, a kneader, a high pressure jet mill (e.g. a nanomizer etc.) and the like, optionally using a dispersing medium such as glass beads, steal beads, zircona beads, etc. In the dispersing step, various additives such as a surfactant, other resin, a pigment disperser, a pigment derivative, a charge generator, etc. may be added to the dispersion.

Conditions for dispersing the solid in the medium depend on the kind of the solid, the type of the dispersing apparatus, and so on. In view of economical production of the dispersion, a temperature is in a range of 0 to 150°C, and a dispersing time is as short as possible. A dispersing time of 0.1 to 10 hr/kg is satisfactory from the viewpoint of productivity.

The particle size after dispersing is suitably selected so that the average particle size of the intended solid particles coated with the resin is within the above-described range. A method for measuring a particle size is not limited and any conventional method may be used. For example, a particle size may be measured with a particle size measuring apparatus of a laser scattering type or a centrifugal sedimentation type.

In step B, water is slowly added to and mixed with the dispersion prepared in step A, or vice versa. In this case, during or after addition, the mixture is uniformly mixed with a simple stirring apparatus such as a Three-One Motor, a magnetic stirrer, a Disper, a homogenizer, etc. A mixer such as a line mixer may also be used. Furthermore, to finely divide the precipitated particles, a dispersing apparatus such as a bead mill or a high pressure jet mill may be used.

Step C is carried out to remove an organic solvent, when the presence of the organic solvent in the dispersion is not desired. For concentration, a conventional distillation method under atmospheric or reduced pressure may be employed. The organic solvent to be removed in the concentration step is one that is used in step A for dissolving the resin having the polyether structure. Preferably, such a solvent is an organic solvent which is easily soluble in water and has a boiling point of 100°C or lower, for example, methyl ethyl ketone, tetrahydrofuran, isopropanol, ethanol, etc.

The aqueous dispersion prepared by the above method usually contains water in an amount of 50 to 10,000 parts by weight, preferably 100 to 3,000 parts by weight, per 100 parts by weight of the water-insoluble solid.

The aqueous dispersion of the present invention may optionally contain various additives which are added to the dispersion during the preparation thereof if necessary, for example, a surfactant, a pigment disperser, a pigment derivative, a charge generator, and further a preservative, a deodorant, an anti-skinning agent, a perfume, etc.

The aqueous dispersion of the present invention having the above composition can be used in various applications depending on the kind of the solid contained. When the pigment is used as the solid, the aqueous dispersion is useful as a paint, a printing ink such as a gravure ink, an ink-jet printing ink, a liquid toner for a wet type electrophotographic printer or an ink-jet printer using electrostatic force. In particular, in the field of inks, the aqueous dispersion of the present invention can be stably used for a long time since the surfaces of the pigment particles are coated with the resin having the polyether structure which can be self-dispersed in water and thus they are hardly agglomerated.

When the aqueous dispersion of the present invention is used in each of the above applications, a binder and/or an organic solvent are added, and various additives are added to the dispersion in accordance with the application to adjust a solid content or a binder concentration. In this case, the mixture of the dispersion and the binder, organic solvent and/or additives may be mixed with a simple stirring apparatus such as a Disper, and any conventionally used dispersing apparatus is not necessary. Therefore, the aqueous dispersion of the present invention can contribute to energy saving and cost reduction.

The binder may be any resin that is conventionally used as a binder. Examples of such resins include natural proteins, celluloses, and synthetic polymers such as polyvinyl alcohol, polyacrylamide, polyacrylic acid, polyvinyl ether, polyvinylpyrrolidone, acrylic resins, polyester resins, alkyd resins, polyurethane resins, polyamide resins, aromatic polyamide resins, melamine resins, polyether resins, fluororesins, styrene-acryl resins, styrene-maleic acid resins, etc., as well as photosensitive resins, thermosetting resins, UV curable resins and electron beam curable resins.

Examples of the additives above include anionic, cationic and nonionic surfactants, an anti-skinning agent, a leveling agent, a metal soap, a charge-adjusting agent such as lecithin, a wetting agent, and so on.

### EXAMPLES

The present invention will be illustrated by the following examples.

In the examples, "parts" and "%" are "parts by weight" and "% by weight" unless otherwise indicated. Reagents which are not specifically noted are all Fist Grade chemicals available from WAKO Pure Chemical Industries, Ltd.

Self-Dispersible Polymers A to G used in the Examples below as resins having a polyether structure, which are self-dispersed in water, were synthesized in following Synthesis Examples 1 to 7.

Polymer H having no polyether structure, and Polymer I having a polyether structure and an acid value exceeding 70 KOH-mg/g, which were used in Comparative Examples instead of the self-dispersible polymers, were synthesized in Comparative Synthesis Examples 1 and 2, respectively.

### Synthesis Example 1

### Synthesis of Self-Dispersible Polymer A

| | |
|---|---|
| n-Butyl acrylate | 33.3 parts |
| n-Butyl methacrylate | 10.9 parts |
| Styrene | 20.0 parts |
| Methacrylic acid | 4.5 parts |
| Glycidyl methacrylate | 4.5 parts |
| PME-400 | 26.7 parts |
| (Methoxy polyethylene glycol mono-methacrylate available from NOF Corp.) | |
| Perbutyl O (Peroxy ester available from NOF Corp.) | 4.0 parts |

The above ingredients were mixed to form a solution.

In a reactor equipped with a nitrogen gas inlet tube, methyl ethyl ketone (100 parts) was charged and heated up to 75°C while introducing nitrogen gas in the reactor. To methyl ethyl ketone in the reactor, the above solution was dropwise added over 4 hours, and thereafter further reacted at 75°C for 5 hours. The solution after reaction had an nonvolatile content of 51.0% and an acid value of 29.0 KOH-mg/g, and contained Polymer A having a number average molecular weight of 13,000.

One part of Polymer A was diluted with methyl ethyl ketone, and then 0.5 part of water was added to dilute Polymer A. Polymer A was self-dispersed to obtain a dispersion having an average particle size of 0.035 µm (measured with a laser Doppler type particle size distribution meter "N4 PLUS" manufactured by Beckman Coulter, Inc.).

### Synthesis Example 2

### Synthesis of Self-Dispersible Polymer B

| | |
|---|---|
| n-Butyl acrylate | 33.3 parts |
| n-Butyl methacrylate | 10.9 parts |
| Styrene | 20.0 parts |
| Methacrylic acid | 4.5 parts |
| Glycidyl methacrylate | 4.5 parts |
| AME-400 (Methoxy polyethylene glycol monoacrylate available from NOF Corp.) | 26.7 parts |
| 2,2-Azobisisobutyronitrile | 4.0 parts |

The above ingredients were mixed to form a solution.

In a reactor equipped with a nitrogen gas inlet tube, methyl ethyl ketone (100 parts) was charged and heated up to 75°C while introducing nitrogen gas in the reactor. To methyl ethyl ketone in the reactor, the above solution was dropwise added over 4 hours, and thereafter further reacted at 75°C for 5 hours. The solution after reaction had an nonvolatile content of 51.5% and an acid value of 27.5 KOH-mg/g, and contained Polymer B having a number average molecular weight of 7,000.

One part of Polymer B was diluted with methyl ethyl ketone, and then 0.5 part of water was added to dilute Polymer B. Polymer B was self-dispersed to obtain a dispersion having an average particle size of 0.032 µm (measured with a laser Doppler type particle size distribution meter "N4 PLUS" manufactured by Beckman Coulter, Inc.).

### Synthesis Example 3

### Synthesis of Self-Dispersible Polymer C

| | |
|---|---|
| n-Butyl acrylate | 23.3 parts |
| n-Butyl methacrylate | 9.6 parts |
| Styrene | 20.0 parts |
| Methacrylic acid | 3.0 parts |
| Glycidyl methacrylate | 7.5 parts |
| PME-400 (Methoxy polyethylene glycol mono-methacrylate available from NOF Corp.) | 26.6 parts |
| AMP-10G (Phenoxyethyl acrylate available from Shin-Nakamura Chemical, Co. Ltd.) | 10.0 parts |
| 2,2-Azobisisobutyronitrile | 4.0 parts |

The above ingredients were mixed to form a solution.

In a reactor equipped with a nitrogen gas inlet tube, methyl ethyl ketone (100 parts) was charged and heated up to 75°C while introducing nitrogen gas in the reactor. To methyl ethyl ketone in the reactor, the above solution was dropwise added over 4 hours, and thereafter further reacted at 75°C for 5 hours. The solution after reaction had an nonvolatile content of 44.7% and an acid value of 19.7 KOH-mg/g, and contained Polymer C having a number average molecular weight of 13,000.

One part of Polymer C was diluted with methyl ethyl ketone, and then 0.5 part of water was added to dilute Polymer C. Polymer C was self-dispersed to obtain a dispersion having an average particle size of 0.040 µm (measured with a laser Doppler type particle size distribution meter "N4 PLUS" manufactured by Beckman Coulter, Inc.).

### Synthesis Example 4

### Synthesis of Self-Dispersible Polymer D

| | |
|---|---|
| n-Butyl acrylate | 30.0 parts |
| n-Butyl methacrylate | 26.0 parts |
| Styrene | 6.7 parts |
| Methacrylic acid | 4.0 parts |
| PME-1000 (Methoxy polyethylene glycol mono-methacrylate available from NOF Corp.) | 33.3 parts |
| Perbutyl O (Peroxy ester available from NOF Corp.) | 2.0 parts |

The above ingredients were mixed to form a solution.

In a reactor equipped with a nitrogen gas inlet tube, methyl ethyl ketone (100 parts) was charged and heated up to 80°C while introducing nitrogen gas in the reactor. To methyl ethyl ketone in the reactor, the above solution was dropwise added over 2 hours, and thereafter further reacted at 80°C for 13 hours. The solution after reaction had an nonvolatile content of 50.5% and an acid value of 26.2 KOH-mg/g, and contained Polymer D having a number average molecular weight of 21,000.

One part of Polymer D was diluted with methyl ethyl ketone, and then 0.5 part of water was added to dilute Polymer D. Polymer D was self-dispersed to obtain a dispersion having an average particle size of 0.045 µm (measured with a laser Doppler type particle size distribution meter "N4 PLUS" manufactured by Beckman Coulter, Inc.).

### Synthesis Example 5

### Synthesis of Self-Dispersible Polymer E

| | |
|---|---|
| n-Butyl acrylate | 15.5 parts |
| Styrene | 20.0 parts |
| NK ESTER SA (β-Methacryloyloxyethyl hydrogen succinate available from Shin-Nakamura Chemical Co., Ltd.) | 25.0 parts |
| Glycidyl methacrylate | 7.5 parts |
| PME-400 (Methoxy polyethylene glycol mono-methacrylate available from NOF Corp.) | 32.0 parts |
| Perbutyl O (Peroxy ester available from NOF Corp.) | 4.0 parts |

The above ingredients were mixed to form a solution.

In a reactor equipped with a nitrogen gas inlet tube, methyl ethyl ketone (100 parts) was charged and heated up to 75°C while introducing nitrogen gas in the reactor. To methyl ethyl ketone in the reactor, the above solution was dropwise added over 4 hours, and thereafter further reacted at 75°C for 5 hours. The solution after reaction had an nonvolatile content of 47.3% and an acid value of 45.6 KOH-mg/g, and contained Polymer E having a number average molecular weight of 16,000.

One part of Polymer E was diluted with methyl ethyl ketone, and then 0.5 part of water was added to dilute Polymer E. Polymer E was self-dispersed to obtain a dispersion having an average particle size of 0.025 µm (measured with a laser Doppler type particle size distribution meter "N4 PLUS" manufactured by Beckman Coulter, Inc.).

### Synthesis Example 6

### Synthesis of Self-Dispersible Polymer F

| | |
|---|---|
| n-Butyl methacrylate | 14.9 parts |
| Styrene | 20.0 parts |
| Methacrylic acid | 5.0 parts |
| 2-Hydroxyethyl methacrylate | 33.3 parts |
| Glycidyl methacrylate | 5.6 parts |
| PP-500 (Polypropylene glycol monomethacrylate available from NOF Corp.) | 21.2 parts |
| Perbutyl O (Peroxy ester available from NOF Corp.) | 6.0 parts |

The above ingredients were mixed to form a solution.

In a reactor equipped with a nitrogen gas inlet tube, methyl ethyl ketone (100 parts) was charged and heated up to 75°C while introducing nitrogen gas in the reactor. To methyl ethyl ketone in the reactor, the above solution was dropwise added over 4 hours, and thereafter further reacted at 75°C for 5 hours. The solution after reaction had an nonvolatile content of 47.7% and an acid value of 34.5 KOH-mg/g, and contained Polymer F having a number average molecular weight of 10,000.

One part of Polymer F was diluted with methyl ethyl ketone, and then 0.5 part of water was added to dilute Polymer F. Polymer F was self-dispersed to obtain a dispersion having an average particle size of 0.055 µm (measured with a laser Doppler type particle size distribution meter "N4 PLUS" manufactured by Beckman Coulter, Inc.).

### Synthesis Example 7

### Synthesis of Self-Dispersible Polymer G

| | |
|---|---|
| n-Butyl methacrylate | 44.3 parts |
| Methacrylic acid | 1.5 parts |
| Glycidyl methacrylate | 7.5 parts |
| AMP-10G (Phenoxyethyl acrylate available from Shin-Nakamura Chemical, Co. Ltd.) | 20.0 parts |
| PP-800 (Polypropylene glycol monomethacrylate available from NOF Corp.) | 26.7 parts |
| Perbutyl O (Peroxy ester available from NOF Corp.) | 4.0 parts |

The above ingredients were mixed to form a solution.

In a reactor equipped with a nitrogen gas inlet tube, methyl ethyl ketone (100 parts) was charged and heated up to 75°C while introducing nitrogen gas in the reactor. To methyl ethyl ketone in the reactor, the above solution was dropwise added over 4 hours, and thereafter further reacted at 75°C for 5 hours. The solution after reaction had an nonvolatile content of 48.8% and an acid value of 14.6 KOH-mg/g, and contained Polymer G having a number average molecular weight of 15,000.

One part of Polymer G was diluted with methyl ethyl ketone, and then 0.5 part of water was added to dilute Polymer G. Polymer G was self-dispersed to obtain a dispersion having an average particle size of 0.098 µm (measured with a laser Doppler type particle size distribution meter "N4 PLUS" manufactured by Beckman Coulter, Inc.).

### Comparative Synthesis Example 1

### Synthesis of Polymer H having no polyether structure

| | |
|---|---|
| n-Butyl acrylate | 41.3 parts |
| n-Butyl methacrylate | 23.0 parts |
| Styrene | 17.2 parts |
| Methacrylic acid | 3.5 parts |
| 2-Hydroxyethyl methacrylate | 15.0 parts |
| Perbutyl O (Peroxy ester available from NOF Corp.) | 2.0 parts |

The above ingredients were mixed to form a solution.

In a reactor equipped with a nitrogen gas inlet tube, methyl ethyl ketone (100 parts) was charged and heated up to 80°C while introducing nitrogen gas in the reactor. To methyl ethyl ketone in the reactor, the above solution was dropwise added over 2 hours, and thereafter further reacted at 80°C for 15 hours. The solution after reaction had an nonvolatile content of 52.0% and an acid value of 25.8 KOH-mg/g, and contained Polymer H having a number average molecular weight of 24,000.

One part of Polymer H was diluted with methyl ethyl ketone, and then 0.5 part of water was added to dilute Polymer H. However, Polymer H was not self-dispersed, but it was precipitated. That is, Polymer H had no property to be self-dispersed in water since it had no polyether structure in the molecule.

### Comparative Synthesis Example 2

### Synthesis of polymer having a polyether structure and an acid value exceeding 70 KOH-mg/g

| | |
|---|---|
| n-Butyl acrylate | 22.9 parts |
| n-Butyl methacrylate | 10.9 parts |
| Styrene | 20.0 parts |
| Methacrylic acid | 15.0 parts |
| Glycidyl methacrylate | 4.5 parts |
| PME-400 (Methoxy polyethylene glycol mono-methacrylate available from NOF Corp.) | 26.7 parts |
| Perbutyl O (Peroxy ester available from NOF Corp.) | 4.0 parts |

The above ingredients were mixed to form a solution.

In a reactor equipped with a nitrogen gas inlet tube, methyl ethyl ketone (100 parts) was charged and heated up to 80°C while introducing nitrogen gas in the reactor. To methyl ethyl ketone in the reactor, the above solution was dropwise added over 2 hours, and thereafter further reacted at 80°C for 12 hours. The solution after reaction had an nonvolatile content of 51.3% and an acid value of 71.8 KOH-mg/g, and contained Polymer I having a number average molecular weight of 14,000.

One part of Polymer I was diluted with methyl ethyl ketone, and then 2 parts of water was added to dilute Polymer I. Polymer I was self-dispersed to obtain a dispersion having an average particle size of 0.015 µm (measured with a laser Doppler type particle size distribution meter "N4 PLUS" manufactured by Beckman Coulter, Inc.), but it was found that a part of Polymer I was dissolved in water.

### Example 1

In a 100 cc plastic bottle, 4.0 parts of Self-Dispersible Polymer A prepared in Synthesis Example 1, 4.0 parts of copper phthalocyanine blue pigment (FASTGEN BLUE GNPS available from Dainippon Ink and Chemicals Inc.) as a solid, 12.0 parts of methyl ethyl ketone and 100 parts of zirconia beads having a diameter of 3 mm were weighed and charged, and then the mixture was dispersed with a paint shaker (available from Toyo Seiki Kogyo Co., Ltd.) for 2 hours. Thereafter, 10.0 parts of methyl ethyl ketone was further added to the mixture to obtain a dispersion in a slurry form.

Then, 0.2 part of 2-dimethylaminoethanol and 44.8 parts of water were charged in a beaker and stirred with a magnetic stirrer. To this mixture, 15.0 parts of the above dispersion was slowly dropwise added while stirring to obtain fine particles of the pigment, to the surfaces of which Polymer A was deposited and adhered. After that, methyl ethyl ketone was evaporated off under reduced pressure to obtain an aqueous dispersion having a pigment concentration of 4.65%.

This aqueous dispersion had an average particle size of 0.156 µm (measured with a laser Doppler type particle size distribution meter "N4 PLUS" manufactured by Beckman Coulter, Inc.), a surface tension of 3.9 x 10⁻⁴ N/cm, and a viscosity of 1.49 mPa.s.

The nonvolatile concentration of the aqueous dispersion was adjusted at 2% with water, and the dispersion was subjected to centrifugation of 33,500 G for 5 hours. Then, a coated amount of the resin was calculated from the amount of nonvolatiles in the supernatant. The amount of the resin coated was 31.5 parts per 100 parts of the pigment.

Furthermore, the aqueous dispersion was subjected to a storage test by storing it in a thermostatic chamber at 70°C for 14 days. Thereafter, the dispersion had an average particle size of 0.158 µm, a surface tension of 3.9 x 10⁻⁴ N/cm, and a viscosity of 1.47 mPa.s. These results show that the pigment particles did not agglomerate in the above storage test, and the aqueous dispersion had excellent storage stability.

To 63.2 parts of the aqueous dispersion, 10.0 parts of triethylene glycol mono-n-butyl ether as a penetrant, 2.0 parts of an antifoaming agent (SURFINOL 465 available from Nissin Chemical Industries, Ltd.) and 24.5 parts of water were added to obtain an aqueous ink-jet printing ink having a pigment content of 3%.

This ink had an average particle size of 0.155 µm, a surface tension of 3.3 x 10⁻⁴ N/cm and a viscosity of 1.36 mPa.s.

The ink was subjected to a storage test by storing it in a thermostatic chamber at 70°C for 14 days. Thereafter, the ink had an average particle size of 0.158 µm, a surface tension of 3.2 x 10⁻⁴ N/cm, and a viscosity of 1.34 mPa.s. These results show that the pigment particles in the ink did not agglomerate in the above storage test, and the ink had excellent storage stability.

### Example 2

An aqueous dispersion having a pigment concentration of 4.60% was prepared in the same manner as in Example 1 except that 4.0 parts of a quinacridone pigment (CINQUASIA MAGENTA RT-355-D available from Ciba Specialty Chemicals) was used in place of 4.0 parts of copper phthalocyanine blue pigment (FASTGEN BLUE GNPS available from Dainippon Ink and Chemicals Inc.)

This aqueous dispersion had an average particle size of 0.158 µm (measured with a laser Doppler type particle size distribution meter "N4 PLUS" manufactured by Beckman Coulter, Inc.), a surface tension of 3.6 x 10⁻⁴ N/cm, and a viscosity of 1.48 mPa.s.

The nonvolatile concentration of the aqueous dispersion was adjusted at 2% with water, and the dispersion was subjected to centrifugation of 33,500 G for 5 hours. Then, a coated amount of the resin was calculated from the amount of nonvolatiles in the supernatant. The amount of the resin coated was 25.5 parts per 100 parts of the pigment.

Furthermore, the aqueous dispersion was subjected to a storage test by storing it in a thermostatic chamber at 70°C for 14 days. Thereafter, the dispersion had an average particle size of 0.158 µm, a surface tension of 3.6 x 10⁻⁴ N/cm, and a viscosity of 1.47 mPa.s. These results show that the pigment particles did not agglomerate in the above storage test, and the aqueous dispersion had excellent storage stability.

To 65.2 parts of the aqueous dispersion, 10.0 parts of triethylene glycol mono-n-butyl ether as a penetrant, 2.0 parts of an antifoaming agent (SURFINOL 465 available from Nissin Chemical Industries, Ltd.) and 22.8 parts of water were added to obtain an aqueous ink-jet printing ink having a pigment content of 3%.

This ink had an average particle size of 0.152 µm, a surface tension of 3.2 x 10⁻⁴ N/cm and a viscosity of 1.89 mPa.s.

The ink was subjected to a storage test by storing it in a thermostatic chamber at 70°C for 14 days. Thereafter, the ink had an average particle size of 0.151 µm, a surface tension of 3.2 x 10⁻⁴ N/cm, and a viscosity of 1.86 mPa.s. These results show that the pigment particles in the ink did not agglomerate in the above storage test, and the ink had excellent storage stability.

### Example 3

An aqueous dispersion having a pigment concentration of 4.96% was prepared in the same manner as in Example 1 except that 4.0 parts of Self-Dispersible Polymer B prepared in Synthesis Example 2 was used in place of 4.0 parts of Self-Dispersible Polymer A prepared in Synthesis Example 1.

This aqueous dispersion had an average particle size of 0.126 µm (measured with a laser Doppler type particle size distribution meter "N4 PLUS" manufactured by Beckman Coulter, Inc.), a surface tension of 4.3 x 10⁻⁴ N/cm, and a viscosity of 1.38 mPa.s.

The nonvolatile concentration of the aqueous dispersion was adjusted at 2% with water, and the dispersion was subjected to centrifugation of 33,500 G for 5 hours. Then, a coated amount of the resin was calculated from the amount of nonvolatiles in the supernatant. The amount of the resin coated was 38.6 parts per 100 parts of the pigment.

Furthermore, the aqueous dispersion was subjected to a storage test by storing it in a thermostatic chamber at 70°C for 14 days. Thereafter, the dispersion had an average particle size of 0.130 µm, a surface tension of 4.3 x 10⁻⁴ N/cm, and a viscosity of 1.37 mPa.s. These results show that the pigment particles did not agglomerate in the above storage test, and the aqueous dispersion had excellent storage stability.

To 60.5 parts of the aqueous dispersion, 10.0 parts of triethylene glycol mono-n-butyl ether as a penetrant, 2.0 parts of an antifoaming agent (SURFINOL 465 available from Nissin Chemical Industries, Ltd.) and 27.5 parts of water were added to obtain an aqueous ink-jet printing ink having a pigment content of 3%.

This ink had an average particle size of 0.133 µm, a surface tension of 3.7 x 10⁻⁴ N/cm and a viscosity of 1.31 mPa.s.

The ink was subjected to a storage test by storing it in a thermostatic chamber at 70°C for 14 days. Thereafter, the ink had an average particle size of 0.134 µm, a surface tension of 3.6 x 10⁻⁴ N/cm, and a viscosity of 1.30 mPa.s. These results show that the pigment particles in the ink did not agglomerate in the above storage test, and the ink had excellent storage stability.

### Example 4

An aqueous dispersion having a pigment concentration of 5.98% was prepared in the same manner as in Example 1 except that 4.0 parts of carbon black (Printex 85 available from Degussa-Huls AG) was used in place of 4.0 parts of copper phthalocyanine blue pigment (FASTGEN BLUE GNPS available from Dainippon Ink and Chemicals Inc.), and 4.0 parts of Self-Dispersible Polymer C prepared in Synthesis Example 3 was used in place of 4.0 parts of Self-Dispersible Polymer A prepared in Synthesis Example 1.

This aqueous dispersion had an average particle size of 0.149 µm (measured with a laser Doppler type particle size distribution meter "N4 PLUS" manufactured by Beckman Coulter, Inc.), a surface tension of 4.1 x 10⁻⁴ N/cm, and a viscosity of 1.89 mPa.s.

The nonvolatile concentration of the aqueous dispersion was adjusted at 2% with water, and the dispersion was subjected to centrifugation of 33,500 G for 5 hours. Then, a coated amount of the resin was calculated from the amount of nonvolatiles in the supernatant. The amount of the resin coated was 44.3 parts per 100 parts of the pigment.

Furthermore, the aqueous dispersion was subjected to a storage test by storing it in a thermostatic chamber at 70°C for 14 days. Thereafter, the dispersion had an average particle size of 0.146 µm, a surface tension of 4.1 x 10⁻⁴ N/cm, and a viscosity of 1.91 mPa.s. These results show that the pigment particles did not agglomerate in the above storage test, and the aqueous dispersion had excellent storage stability.

To 83.6 parts of the aqueous dispersion, 10.0 parts of triethylene glycol mono-n-butyl ether as a penetrant, 2.0 parts of an antifoaming agent (SURFINOL 465 available from Nissin Chemical Industries, Ltd.) and 4.4 parts of water were added to obtain an aqueous ink-jet printing ink having a pigment content of 5%.

This ink had an average particle size of 0.149 µm, a surface tension of 3.7 x 10⁻⁴ N/cm and a viscosity of 1.76 mPa.s.

The ink was subjected to a storage test by storing it in a thermostatic chamber at 70°C for 14 days. Thereafter, the ink had an average particle size of 0.150 µm, a surface tension of 3.6 x 10⁻⁴ N/cm, and a viscosity of 1.77 mPa.s. These results show that the pigment particles in the ink did not agglomerate in the above storage test, and the ink had excellent storage stability.

### Example 5

An aqueous dispersion having a pigment concentration of 6.30% was prepared in the same manner as in Example 1 except that 4.0 parts of Self-Dispersible Polymer D prepared in Synthesis Example 4 was used in place of 4.0 parts of Self-Dispersible Polymer A prepared in Synthesis Example 1.

This aqueous dispersion had an average particle size of 0.157 µm (measured with a laser Doppler type particle size distribution meter "N4 PLUS" manufactured by Beckman Coulter, Inc.), a surface tension of 3.4 x 10⁻⁴ N/cm, and a viscosity of 1.99 mPa.s.

The nonvolatile concentration of the aqueous dispersion was adjusted at 2% with water, and the dispersion was subjected to centrifugation of 33,500 G for 5 hours. Then, a coated amount of the resin was calculated from the amount of nonvolatiles in the supernatant. The amount of the resin coated was 33.5 parts per 100 parts of the pigment.

Furthermore, the aqueous dispersion was subjected to a storage test by storing it in a thermostatic chamber at 70°C for 14 days. Thereafter, the dispersion had an average particle size of 0.156 µm, a surface tension of 3.4 x 10⁻⁴ N/cm, and a viscosity of 1.97 mPa.s. These results show that the pigment particles did not agglomerate in the above storage test, and the aqueous dispersion had excellent storage stability.

To 47.6 parts of the aqueous dispersion, 10.0 parts of triethylene glycol mono-n-butyl ether as a penetrant, 2.0 parts of an antifoaming agent (SURFINOL 465 available from Nissin Chemical Industries, Ltd.) and 40.4 parts of water were added to obtain an aqueous ink-jet printing ink having a pigment content of 3%.

This ink had an average particle size of 0.156 µm, a surface tension of 3.0 x 10⁻⁴ N/cm and a viscosity of 1.73 mPa.s.

The ink was subjected to a storage test by storing it in a thermostatic chamber at 70°C for 14 days. Thereafter, the ink had an average particle size of 0.158 µm, a surface tension of 3.0 x 10⁻⁴ N/cm, and a viscosity of 1.78 mPa.s. These results show that the pigment particles in the ink did not agglomerate in the above storage test, and the ink had excellent storage stability.

### Example 6

An aqueous dispersion having a pigment concentration of 4.30% was prepared in the same manner as in Example 1 except that 4.0 parts of Self-Dispersible Polymer E prepared in Synthesis Example 5 was used in place of 4.0 parts of Self-Dispersible Polymer A prepared in Synthesis Example 1.

This aqueous dispersion had an average particle size of 0.142 µm (measured with a laser Doppler type particle size distribution meter "N4 PLUS" manufactured by Beckman Coulter, Inc.), a surface tension of 3.8 x 10⁻⁴ N/cm, and a viscosity of 2.00 mPa.s.

The nonvolatile concentration of the aqueous dispersion was adjusted at 2% with water, and the dispersion was subjected to centrifugation of 33,500 G for 5 hours. Then, a coated amount of the resin was calculated from the amount of nonvolatiles in the supernatant. The amount of the resin coated was 43.5 parts per 100 parts of the pigment.

Furthermore, the aqueous dispersion was subjected to a storage test by storing it in a thermostatic chamber at 70°C for 14 days. Thereafter, the dispersion had an average particle size of 0.146 µm, a surface tension of 3.8 x 10⁻⁴ N/cm, and a viscosity of 1.97 mPa.s. These results show that the pigment particles did not agglomerate in the above storage test, and the aqueous dispersion had excellent storage stability.

To 69.8 parts of the aqueous dispersion, 10.0 parts of triethylene glycol mono-n-butyl ether as a penetrant, 2.0 parts of an antifoaming agent (SURFINOL 465 available from Nissin Chemical Industries, Ltd.) and 18.2 parts of water were added to obtain an aqueous ink-jet printing ink having a pigment content of 3%.

This ink had an average particle size of 0.145 µm, a surface tension of 3.3 x 10⁻⁴ N/cm and a viscosity of 1.78 mPa.s.

The ink was subjected to a storage test by storing it in a thermostatic chamber at 70°C for 14 days. Thereafter, the ink had an average particle size of 0.149 µm, a surface tension of 3.3 x 10⁻⁴ N/cm, and a viscosity of 1.80 mPa.s. These results show that the pigment particles in the ink did not agglomerate in the above storage test, and the ink had excellent storage stability.

### Example 7

An aqueous dispersion having a pigment concentration of 5.08% was prepared in the same manner as in Example 1 except that 4.0 parts of a disazo pigment (Yellow HGAF LP901 available from Clariant Corp.) was used in place of 4.0 parts of copper phthalocyanine blue pigment (FASTGEN BLUE GNPS available from Dainippon Ink and Chemicals Inc.), the amount of methyl ethyl ketone was reduced from 12.0 parts to 10.0 parts, and 2.0 parts of n-hexane was added.

This aqueous dispersion had an average particle size of 0.189 µm (measured with a laser Doppler type particle size distribution meter "N4 PLUS" manufactured by Beckman Coulter, Inc.), a surface tension of 3.6 x 10⁻⁴ N/cm, and a viscosity of 1.66 mPa.s.

The nonvolatile concentration of the aqueous dispersion was adjusted at 2% with water, and the dispersion was subjected to centrifugation of 33,500 G for 5 hours. Then, a coated amount of the resin was calculated from the amount of nonvolatiles in the supernatant. The amount of the resin coated was 26.5 parts per 100 parts of the pigment.

Furthermore, the aqueous dispersion was subjected to a storage test by storing it in a thermostatic chamber at 70°C for 14 days. Thereafter, the dispersion had an average particle size of 0.146 µm, a surface tension of 3.7 x 10⁻⁴ N/cm, and a viscosity of 1.63 mPa.s. These results show that the pigment particles did not agglomerate in the above storage test, and the aqueous dispersion had excellent storage stability.

To 59.0 parts of the aqueous dispersion, 10.0 parts of triethylene glycol mono-n-butyl ether as a penetrant, 2.0 parts of an antifoaming agent (SURFINOL 465 available from Nissin Chemical Industries, Ltd.) and 29.0 parts of water were added to obtain an aqueous ink-jet printing ink having a pigment content of 3%.

This ink had an average particle size of 0.190 µm, a surface tension of 3.3 x 10⁻⁴ N/cm and a viscosity of 1.58 mPa.s.

The ink was subjected to a storage test by storing it in a thermostatic chamber at 70°C for 14 days. Thereafter, the ink had an average particle size of 0.192 µm, a surface tension of 3.2 x 10⁻⁴ N/cm, and a viscosity of 1.57 mPa.s. These results show that the pigment particles in the ink did not agglomerate in the above storage test, and the ink had excellent storage stability.

### Example 8

An aqueous dispersion having a pigment concentration of 4.63% was prepared in the same manner as in Example 1 except that 4.0 parts of Self-Dispersible Polymer F prepared in Synthesis Example 6 was used in place of 4.0 parts of Self-Dispersible Polymer A prepared in Synthesis Example 1.

This aqueous dispersion had an average particle size of 0.190 µm (measured with a laser Doppler type particle size distribution meter "N4 PLUS" manufactured by Beckman Coulter, Inc.), a surface tension of 3.5 x 10⁻⁴ N/cm, and a viscosity of 1.89 mPa.s.

The nonvolatile concentration of the aqueous dispersion was adjusted at 2% with water, and the dispersion was subjected to centrifugation of 33,500 G for 5 hours. Then, a coated amount of the resin was calculated from the amount of nonvolatiles in the supernatant. The amount of the resin coated was 32.2 parts per 100 parts of the pigment.

Furthermore, the aqueous dispersion was subjected to a storage test by storing it in a thermostatic chamber at 70°C for 14 days. Thereafter, the dispersion had an average particle size of 0.188 µm, a surface tension of 3.5 x 10⁻⁴ N/cm, and a viscosity of 1.88 mPa.s. These results show that the pigment particles did not agglomerate in the above storage test, and the aqueous dispersion had excellent storage stability.

To 64.8 parts of the aqueous dispersion, 10.0 parts of triethylene glycol mono-n-butyl ether as a penetrant, 2.0 parts of an antifoaming agent (SURFINOL 465 available from Nissin Chemical Industries, Ltd.) and 23.2 parts of water were added to obtain an aqueous ink-jet printing ink having a pigment content of 3%.

This ink had an average particle size of 0.195 µm, a surface tension of 3.2 x 10⁻⁴ N/cm and a viscosity of 1.67 mPa.s.

The ink was subjected to a storage test by storing it in a thermostatic chamber at 70°C for 14 days. Thereafter, the ink had an average particle size of 0.193 µm, a surface tension of 3.1 x 10⁻⁴ N/cm, and a viscosity of 1.68 mPa.s. These results show that the pigment particles in the ink did not agglomerate in the above storage test, and the ink had excellent storage stability.

### Example 9

An aqueous dispersion having a pigment concentration of 4.30% was prepared in the same manner as in Example 1 except that 4.0 parts of Self-Dispersible Polymer G prepared in Synthesis Example 7 was used in place of 4.0 parts of Self-Dispersible Polymer A prepared in Synthesis Example 1.

This aqueous dispersion had an average particle size of 0.135 µm (measured with a laser Doppler type particle size distribution meter "N4 PLUS" manufactured by Beckman Coulter, Inc.), a surface tension of 3.8 x 10⁻⁴ N/cm, and a viscosity of 1.76 mPa.s.

The nonvolatile concentration of the aqueous dispersion was adjusted at 2% with water, and the dispersion was subjected to centrifugation of 33,500 G for 5 hours. Then, a coated amount of the resin was calculated from the amount of nonvolatiles in the supernatant. The amount of the resin coated was 36.9 parts per 100 parts of the pigment.

Furthermore, the aqueous dispersion was subjected to a storage test by storing it in a thermostatic chamber at 70°C for 14 days. Thereafter, the dispersion had an average particle size of 0.138 µm, a surface tension of 3.8 x 10⁻⁴ N/cm, and a viscosity of 1.78 mPa.s. These results show that the pigment particles did not agglomerate in the above storage test, and the aqueous dispersion had excellent storage stability.

To 69.8 parts of the aqueous dispersion, 10.0 parts of triethylene glycol mono-n-butyl ether as a penetrant, 2.0 parts of an antifoaming agent (SURFINOL 465 available from Nissin Chemical Industries, Ltd.) and 18.2 parts of water were added to obtain an aqueous ink-jet printing ink having a pigment content of 3%.

This ink had an average particle size of 0.138 µm, a surface tension of 3.3 x 10⁻⁴ N/cm and a viscosity of 1.82 mPa.s.

The ink was subjected to a storage test by storing it in a thermostatic chamber at 70°C for 14 days. Thereafter, the ink had an average particle size of 0.141 µm, a surface tension of 3.3 x 10⁻⁴ N/cm, and a viscosity of 1.80 mPa.s. These results show that the pigment particles in the ink did not agglomerate in the above storage test, and the ink had excellent storage stability.

### Comparative Example 1

In a 100 cc plastic bottle, 20.0 parts of a styrene-acrylic resin (JOHNCRYL available from Johnson Polymer) as a non-self-dispersible polymer, 20.0 parts of copper phthalocyanine blue pigment (FASTGEN BLUE GNPS available from Dainippon Ink and Chemicals Inc.) as a solid, 57.0 parts of water, 1.8 parts of an antifoaming agent (SURFINOL 104 available from Nissin Chemical Industries, Ltd.) and 100 parts of zirconia beads having a diameter of 3 mm were weighed and charged, and then the mixture was dispersed with a paint shaker (available from Toyo Seiki Kogyo Co., Ltd.) for 2 hours. Thereafter, 253.0 parts of water and 46.5 parts of the same styrene-acrylic resin as above (JOHNCRYL available from Johnson Polymer) were further added to the mixture to obtain an aqueous dispersion having a pigment concentration of 5.00%.

This aqueous dispersion had an average particle size of 0.179 µm (measured with a laser Doppler type particle size distribution meter "N4 PLUS" manufactured by Beckman Coulter, Inc.), a surface tension of 3.2 x 10⁻⁴ N/cm, and a viscosity of 1.97 mPa.s.

The nonvolatile concentration of the aqueous dispersion was adjusted at 2% with water, and the dispersion was subjected to centrifugation of 33,500 G for 5 hours. Then, a coated amount of the resin was calculated from the amount of nonvolatiles in the supernatant. The amount of the resin coated was 2.3 parts per 100 parts of the pigment. This result means that the above resin hardly adhered to the pigment particle surfaces.

Furthermore, the aqueous dispersion was subjected to a storage test by storing it in a thermostatic chamber at 70°C for 3 days. Thereafter, the dispersion had an average particle size of 0.335 µm, a surface tension of 2.9 x 10⁻⁴ N/cm, and a viscosity of 4.26 mPa.s. Accordingly, the pigment particles agglomerated and slightly precipitated in the above storage test, and the aqueous dispersion lacked storage stability.

To 60.0 parts of the aqueous dispersion, 10.0 parts of triethylene glycol mono-n-butyl ether as a penetrant, 2.0 parts of an antifoaming agent (SURFINOL 465 available from Nissin Chemical Industries, Ltd.) and 28.0 parts of water were added to obtain an aqueous ink-jet printing ink having a pigment content of 3%.

This ink had an average particle size of 0.169 µm, a surface tension of 2.8 x 10⁻⁴ N/cm and a viscosity of 1.89 mPa.s.

The ink was subjected to a storage test by storing it in a thermostatic chamber at 70°C for 3 days. Thereafter, the ink had an average particle size of 0.648 µm, a surface tension of 2.8 x 10⁻⁴ N/cm, and a viscosity of 4.75 mPa.s. These results show that the pigment particles in the ink agglomerates in the above storage test, and the ink lacked storage stability.

### Comparative Example 2

An aqueous dispersion having a pigment concentration of 4.86% was prepared in the same manner as in Example 1 except that 4.0 parts of Polymer H having no polyether structure prepared in Comparative Synthesis Example 1 was used in place of 4.0 parts of Self-Dispersible Polymer A prepared in Synthesis Example 1.

This aqueous dispersion had an average particle size of 0.360 µm (measured with a laser Doppler type particle size distribution meter "N4 PLUS" manufactured by Beckman Coulter, Inc.), a surface tension of 3.1 x 10⁻⁴ N/cm, and a viscosity of 2.09 mPa.s.

The nonvolatile concentration of the aqueous dispersion was adjusted at 2% with water, and the dispersion was subjected to centrifugation of 33,500 G for 5 hours. Then, a coated amount of the resin was calculated from the amount of nonvolatiles in the supernatant. The amount of the resin coated was only 11.2 parts per 100 parts of the pigment.

Furthermore, the aqueous dispersion was subjected to a storage test by storing it in a thermostatic chamber at 70°C for 14 days. Thereafter, the dispersion had an average particle size of 0.538 µm, a surface tension of 2.8 x 10⁻⁴ N/cm, and a viscosity of 5.78 mPa.s. Accordingly, the pigment particles agglomerated in the above storage test, and the aqueous dispersion lacked storage stability.

To 61.7 parts of the aqueous dispersion, 10.0 parts of triethylene glycol mono-n-butyl ether as a penetrant, 2.0 parts of an antifoaming agent (SURFINOL 465 available from Nissin Chemical Industries, Ltd.) and 26.3 parts of water were added to obtain an aqueous ink-jet printing ink having a pigment content of 3%.

This ink had an average particle size of 0.455 µm, a surface tension of 2.6 x 10⁻⁴ N/cm and a viscosity of 3.68 mPa.s.

The ink was subjected to a storage test by storing it in a thermostatic chamber at 70°C for 14 days. Thereafter, the ink had an average particle size of 0.523 µm, a surface tension of 2.5 x 10⁻⁴ N/cm, and a viscosity of 4.08 mPa.s. These results show that the pigment particles in the ink agglomerates and slightly precipitated in the above storage test, and the ink lacked storage stability.

### Comparative Example 3

An aqueous dispersion having a pigment concentration of 5.19% was prepared in the same manner as in Example 1 except that 4.0 parts of Polymer I having a polyether structure and an acid value exceeding 70 KOH-mg/g prepared in Comparative Synthesis Example 2 was used in place of 4.0 parts of Self-Dispersible Polymer A prepared in Synthesis Example 1.

This aqueous dispersion had an average particle size of 0.230 µm (measured with a laser Doppler type particle size distribution meter "N4 PLUS" manufactured by Beckman Coulter, Inc.), a surface tension of 3.2 x 10⁻⁴ N/cm, and a viscosity of 2.87 mPa.s.

The nonvolatile concentration of the aqueous dispersion was adjusted at 2% with water, and the dispersion was subjected to centrifugation of 33,500 G for 5 hours. Then, a coated amount of the resin was calculated from the amount of nonvolatiles in the supernatant. The amount of the resin coated was only 10.4 parts per 100 parts of the pigment.

Furthermore, the aqueous dispersion was subjected to a storage test by storing it in a thermostatic chamber at 70°C for 14 days. Thereafter, the dispersion had an average particle size of 0.453 µm, a surface tension of 2.7 x 10⁻⁴ N/cm, and a viscosity of 4.34 mPa.s. Accordingly, the pigment particles agglomerated in the above storage test, and the aqueous dispersion lacked storage stability.

To 57.8 parts of the aqueous dispersion, 10.0 parts of triethylene glycol mono-n-butyl ether as a penetrant, 2.0 parts of an antifoaming agent (SURFINOL 465 available from Nissin Chemical Industries, Ltd.) and 30.2 parts of water were added to obtain an aqueous ink-jet printing ink having a pigment content of 3%.

This ink had an average particle size of 0.280 µm, a surface tension of 2.8 x 10⁻⁴ N/cm and a viscosity of 2.88 mPa.s.

The ink was subjected to a storage test by storing it in a thermostatic chamber at 70°C for 14 days. Thereafter, the ink had an average particle size of 0.368 µm, a surface tension of 2.6 x 10⁻⁴ N/cm, and a viscosity of 3.38 mPa.s. These results show that the pigment particles in the ink agglomerates and slightly precipitated in the above storage test, and the ink lacked storage stability.

### Effects of the Invention

As described above, the present invention can provide an aqueous dispersion which has improved dispersion stability for a wide variety of solids such as pigments, dyes, and so on, causes no problems such as precipitation of the solid particles during the storage of the dispersion, and thus can be stably stored for a long time, since the dispersion of the present invention contains fine particles of a water-insoluble solid which are coated with a resin having a polyether structure, and the coated amount of the resin is 15 to 1,000 parts by weight per 100 parts of the solid. When a pigment is used as the above solid, the present invention can provide an aqueous dispersion used as an ink-jet printing ink, which has good high speed printing properties.

## Claims

1. An aqueous dispersion containing a water-insoluble solid, wherein the solid consists of fine particles surfaces of which are coated with a resin having a polyether structure, and a coated amount of the resin is 15 to 1,000 parts by weight per 100 parts of the solid.

2. The aqueous dispersion according to claim 1, wherein said solid is a pigment.

3. The aqueous dispersion according to claim 1, wherein said resin having a polyether structure has an acid value of 5 to 70 KOH-mg/mg.

4. The aqueous dispersion according to claim 1, wherein said polyester structure comprises at least one of a polyoxyethylene structure and a polyoxypropylene structure.

5. The aqueous dispersion according to claim 1, wherein said resin having a polyether structure comprises an acrylic resin having a polyether structure in grafted portions.

6. The aqueous dispersion according to claim 1, wherein said resin having a polyether structure has a number average molecular weight of 1,000 to 100,000.

7. The aqueous dispersion according to claim 1, wherein said fine particles has an average particle size of 0.01 to 0.3 µm.

8. The aqueous dispersion according to claim 1, which has a surface tension of 3.0 x 10⁻⁴ to 6.0 × 10⁻⁴ N/cm at a solid concentration of 3 to 10% by weight.

9. A method for preparing an aqueous dispersion as claimed in any one of claims 1 to 8, comprising a step of mixing an organic phase containing a water-insoluble solid and a resin having a polyether structure with an aqueous phase to obtain the aqueous dispersion.
